# EUROPEAN PATENT APPLICATION

(11) **EP 1 229 143 A2**
(43) Date of publication of application: **07.08.2002**
(21) Application number: 02250712.3
(22) Date of filing: 01.02.2002
(51) Int. Cl.: C23C 8/26, C21D 9/02, F16F 1/02

(54) **Method for surface hardening a steel coil spring**

(30) Priority: 02.02.2001 US 266350 P
(71) Applicant: Meritor Suspension Systems Company Inc., Troy, Michigan 48084 (US)
(72) Inventor: Medeiros, Leo, Toronto, Ontario M6J 3J6 (CA); King, Tom, Milton, Ontario L9T 4M8 (CA)
(74) Representative: Jones, John Bryn

(57) **Abstract**

A controlled nitrogen diffusion process is employed on a steel coil spring (8) of a suspension system. One known process is that known as the Nitreg® process. Ammonia is introduced into a furnace atmosphere and nitrogen diffuses into the coil spring, creating a hardened diffusion zone (B) which resists fatigue and fractures. The Nitreg® nitrogen diffusion process is a computer controlled menu driven process which continually monitors the process parameters. By regulating the nitriding potential, the monitored process parameters are automatically adjusted to achieve optimal results. The nitriding potential is the tendency of nitrogen to be absorbed by steel and is expressed as the ratio of the partial pressure of ammonia to the partial pressure of hydrogen. Additionally, the depth of the white compound layer (A) can be regulated or eliminated, reducing distortions.

## Description

### BACKGROUND OF THE INVENTION

The present invention relates generally to a method for surface hardening a steel coil spring, in particular nitriding, and to a steel coil spring surface hardened by such a method.

Vehicles are commonly equipped with suspension systems for absorbing road shock and other vibrations, while providing for a smooth and comfortable ride. Steel coil springs are utilized as a part of the vehicle suspension system. The coil springs must be able to resist stresses which cause fractures and decrease the fatigue life of the coil spring.

A nitriding process has been utilized to improve the fatigue life of a coil spring utilized in a vehicle suspension system. Nitriding produces compressive residual stresses on the surface of the coil spring which counteract the tensile stresses produced by everyday use which cause fractures.

Additionally, the nitriding process forms a white layer on the exterior surface of the steel. For most applications, this white layer has no useable properties. The layer is very hard, but brittle, and may spall during use. As it has no useable properties, it is often removed by treatment grinding or finishing.

### SUMMARY OF THE INVENTION

A controlled nitrogen diffusion process is employed on the exterior surface of a steel coil spring of a suspension system to create a hardened layer which reduces fractures and improves fatigue properties. One known process is the Nitreg® process. The Nitreg® process is a computer controlled menu driven process which regulates the nitriding potential of the furnace atmosphere. The nitriding potential is the tendency of nitrogen to be absorbed by steel and is expressed as the ratio of the partial pressure of ammonia to the partial pressure of hydrogen. Electric sensors and furnace components balance the nitriding atmosphere required to maintain the desired nitriding potential.

The steel coil spring is first cleaned to remove scale from the exterior surface. In an atmospheric furnace, the coil spring is heated and ammonia is released. Nitrogen from the ammonia diffuses into the exterior surface of the steel coil spring, creating a hardened diffusion zone on the coil spring. After cooling the coil spring, the coil spring is subject to

The nitriding potential of the furnace atmosphere is regulated depending on the type of steel utilized and the application requirements. By regulating the nitriding potential, the depth of the diffusion zone can be controlled. Additionally, the depth of the white compound layer can be regulated or eliminated to reduce distortions.

These and other features of the present invention will be best understood from the following specification and drawings.

### BRIEF DESCRIPTION OF THE DRAWINGS

The various features and advantages of the invention will become apparent to those skilled in the art from the following detailed description of the currently preferred embodiment. The drawings that accompany the detailed description can be briefly described as follows:
Figure 1 illustrates a schematic side cross sectional view of a nitrided steel coil spring;
Figure 2 illustrates a graph relating the hardness of various steels to the depth below the surface for a prior art nitriding process; and
Figure 3 illustrates a flowchart of the controlled nitrogen diffusion process.

### DETAILED DESCRIPTION OF THE PREFERRED EMBODIMENT

This invention relates to a method for nitriding a coil spring of a suspension system utilizing a controlled nitrogen diffusion process. One known process is the Nitreg® process. The Nitreg® nitrogen diffusion process is a surface hardening heat treatment wherein the nitriding potential of the furnace atmosphere is regulated depending on the type of steel utilized and the application requirements.

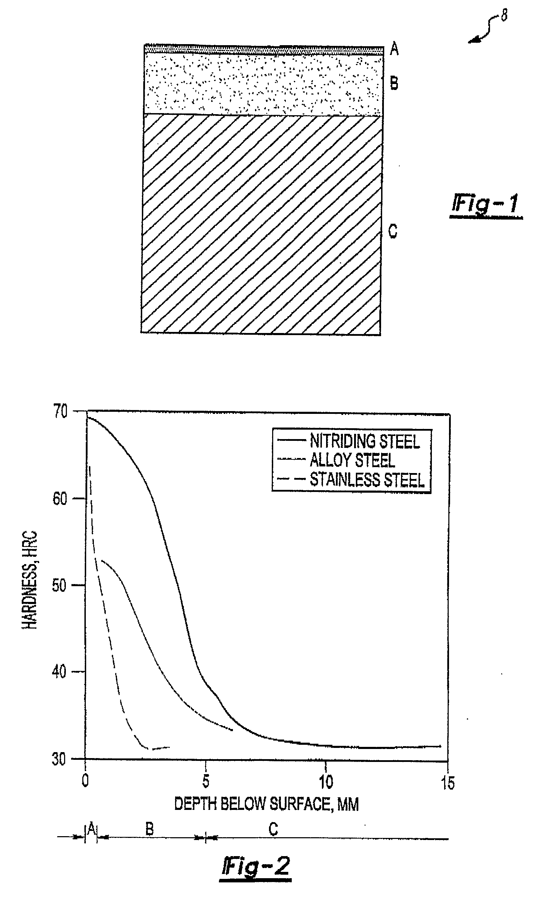

Figure 1 illustrates a side cross sectional view of a nitrided steel coil 8. Nitrogen is introduced into the surface of the steel at a specific temperature range while in the ferritic condition to harden the surface of the steel. Nitrogen is partially soluble in iron. At nitrogen contents up to approximately 6%, nitrogen forms a solid solution with ferrite. When the nitrogen content reaches about 6%, a white layer having a composition of Fe₄N is formed. As shown in Figure 1, this layer is the compound layer A. The compound layer A is very hard, but is brittle and may spall in use.

When the nitrogen content reaches 8%, the equilibrium reaction product Fe₃N is formed, illustrated as diffusion zone B in Figure 1. The diffusion zone B is hardened by the formation of the Fe₃N compound. The diffusion zone B is the layer which provides surface hardening. Below the diffusion zone B is steel zone C. Steel zone C is the inner steel portion of the coil spring in which there is no nitrogen diffusion. The hardness of various steels at the different zones are illustrated in Figure 2.

Nitrided steels generally contain strong nitride-forming elements such as aluminum, vanadium, molybdenum, titanium and chromium. When these steels are nitrated, the nitride-forming elements form particles with the nitrogen which create strengthening dislocations by straining the ferrite lattice.

The Nitreg® nitrogen diffusion process of the present invention is employed on a steel coil spring 8 to create a hardened layer and improve fatigue properties. The Nitreg® nitrogen diffusion process is a computer controlled menu driven process which hardens the surface of the coil spring 8 by regulation of the nitriding potential of the furnace atmosphere. The nitriding potential is the tendency of nitrogen to be absorbed by steel and is expressed by the ratio of the partial pressure of ammonia to the partial pressure of hydrogen. Electronic sensors and furnace components help balance the nitriding atmosphere to maintain the specific nitriding potential. The sensors continually monitor and adjust the process parameters to regulate the nitriding potential. The nitriding potential is programmed depending on the type of steel utilized and the application requirements.

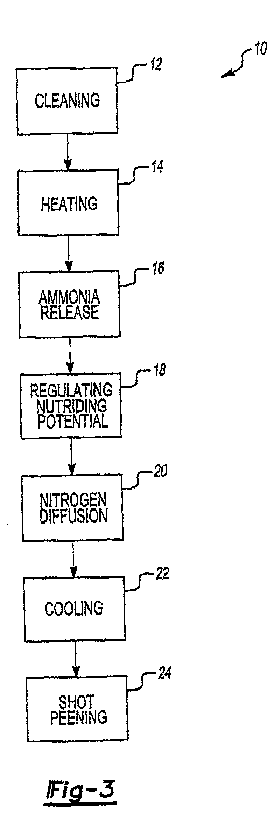

The nitriding process 10 is illustrated schematically in Figure 3. The coil spring 8 is first cleaned 12 to remove scale from the exterior surface. The scale is removed either by shot peening or shot blasting. The exterior scale can also be removed by utilizing hydrochloric acid on the surface of the coil spring 8. The coil spring 8 is positioned in an atmospheric furnace. In the furnace, the coil spring 8 is heated 14 to a temperature between 380°C and 480°C. After heating 14, ammonia is released 16 into the furnace for approximately 3 to 8 hours.

The amount of ammonia released 16 depends on the desired nitriding potential. Nitrogen from the ammonia diffuses 20 into the exterior surface of the steel coil spring 8, creating a hardened diffusion zone B. By regulating the nitriding potential 18 by continually monitoring the process parameters with sensors, the depth of the diffusion zone B can be controlled. The diffusion zone B is preferably between 30 µm and 100 µm deep. Once the nitrogen from the ammonia has diffused into the steel coil spring 8, the coil spring 8 is then cooled 22. The entire cycle lasts approximately 12 to 20 hours.

By regulating the nitriding potential 18 depending on the type of steel utilized and the application requirements, the white compound layer A can be controlled or eliminated. In traditional nitriding, the process produces uncontrollable white layer growth which is removed by post treatment grinding or finishing. The Nitreg® process produces a hard and non-spalling white compound layer A on the exterior surface of the coil spring 8. The growth of the compound layer A can be controlled by regulating the nitriding potential. In the preferred embodiment, the compound zone A is 0 to 2 µm thick.

After the nitriding process, the coil spring 8 is subject to a shot peening process 24 to instill high compressive residual stresses on the surface of the coil spring 8. Preferably, a two-step process is employed. In the first step, the first peening is done with a .8 mm diameter shot, and in the second step, the second peening is done with a .3 mm diameter shot. By employing the additional shot peening step, there is at least a six fold increase in the fatigue life of the coil spring 8 having a .5 inch diameter wire subjected to a stress of 564 +/- 476 Mpa.

The Nitreg® nitrogen diffusion process provides surface hardening. The fatigue properties of the coil spring 8 can be improved, allowing for higher stress design and/or lighter weight springs. The process strengthens the exterior surface of the coil spring 8, decreasing fractures and increasing the fatigue life. Additionally, as the process is computerized, the results are repeatable.

The foregoing description is only exemplary of the principles of the invention. Many modifications and variations of the present invention are possible in light of the above teachings. The preferred embodiments of this invention have been disclosed, however, so that one of ordinary skill in the art would recognize that certain modifications would come within the scope of this invention. It is, therefore, to be understood that within the scope of the appended claims, the invention may be practiced otherwise than as specially described. For that reason the following claims should be studied to determine the true scope and content of this invention.

## Claims

1. A method (10) for surface hardening a steel coil spring (8) of a suspension system comprising the steps of:
nitriding a surface of said coil spring; and
regulating a nitriding potential (18) in a nitriding atmosphere to control the step of nitriding said coil spring, said nitriding potential being the tendency of nitrogen to be absorbed by said steel coil spring.

2. The method as recited in claim 1 wherein the step of regulating said nitriding potential further includes monitoring at least one process parameter.

3. The method as recited in claim 1 or 2 wherein the step of nitriding said coil spring further includes introducing ammonia (16) into said nitriding atmosphere.

4. The method as recited in any preceding claim further comprising the steps of:
cleaning (12) said surface of said coil spring;
heating (14) said coil spring; and
cooling (22) said coil spring.

5. The method as recited in claim 4 wherein the step of beating said coil spring includes heating said nitriding atmosphere to a temperature between 380°C and 480°C.

6. The method as recited in any preceding claim wherein the step of nitriding said coil spring produces a diffusion zone (B) having a depth between 30 µm and 100 µm.

7. The method as recited in any preceding claim wherein the step of nitriding said coil spring further includes forming a compound layer (A) on said surface of said coil spring having a depth between 0 and 2 µm.

8. The method as recited in any preceding claim further comprising the step of shot peening (24) said surface of said coil spring.

9. The method as recited in claim 9 wherein the surface of said coil spring is shot peened with a .8 mm diameter shot and a .3 mm diameter shot.

10. A method (10) for surface hardening a steel coil spring (8) of a suspension system comprising the steps of:
cleaning (12) said surface of said coil spring;
heating (14) said coil spring;
nitriding a surface of said coil spring;
regulating a nitriding potential (18) in a nitriding atmosphere to control the step of nitriding said coil spring, said nitriding potential being the tendency of nitrogen to be absorbed by said steel coil spring;
cooling (22) said coil spring; and
shot peening (24) said surface of said coil spring.

11. A steel coil spring (8) of a suspension system comprising:
a steel body portion having a surface (C); and
a diffusion zone (B) produced by nitriding said surface of said coil spring by regulation of a nitriding potential.

12. The coil spring as recited in claim 11 wherein said surface of said coil spring is nitrided by introducing ammonia (16) into a nitriding atmosphere.

13. The coil spring as recited in claim 11 or 12 wherein a nitriding atmosphere is heated to a temperature between 380°C and 480°C.

14. The coil spring as recited in any one of claims 11 to 13 wherein said diffusion zone has a depth between 30 µm and 100 µm.

15. The coil spring as recited in any one of claims 11 to 14 wherein said coil spring further includes a compound layer having a depth between 0 and 2 µm.
